# EUROPEAN PATENT APPLICATION

(11) **EP 1 858 230 A1**
(43) Date of publication of application: **21.11.2007**
(21) Application number: 07107581.6
(22) Date of filing: 04.05.2007
(51) Int. Cl.: H04L 29/08

(54) **Network storage device with separated control and storage data interfaces**

(30) Priority: 16.05.2006 EP 06290790
(71) Applicant: Thomson Licensing, 92100 Boulogne-Billancourt (FR)
(72) Inventor: Chapel, Claude, 92648, BOULOGNE CEDEX (FR); Guillemot, Jean-Charles, 92648, BOULOGNE CEDEX (FR); LeRoux, Jean, 92648, BOULOGNE CEDEX (FR)
(74) Representative: Le Dantec, Claude

(57) **Abstract**

The invention concerns a network storage device (2) for communicating data between a network (4) and a storage unit (6).

The network storage device (2) comprises an embedded system processor (8) adapted to manage the storage space of the storage unit (6), an network interface component (12) and a storage unit management processor (10) adapted to organise storage data communication and to communicate storage data.

The network storage device (2) is characterised in that the network interface component (12) comprises a hardware processor (20) implemented in dedicated hardware for dedicated hardware processing of data.

The network interface component (12) additionally comprises a control data interface (24) and a storage data interface (28) and the storage data interface (28) and the control data interface (24) are completely separated from one another.

## Description

### FIELD OF THE INVENTION

The invention is related to a network storage device for communicating data between a network and a storage unit.

### BACKGROUND OF THE INVENTION

Data stored on a storage unit is made accessible to several clients or applications connected to a network through network attached storage (NAS). Network attached storage is generally implemented by connecting a NAS device to a network switch to which a number of applications running on other devices or servers are connected.

A NAS device comprises a network interface card, a central processing unit, a storage unit containing hard disk drives and a redundant array of independent disks (RAID) controller. All components can be mounted on a single board or the storage unit can be independent to the other components. The advantage of an NAS device on a single board lies in the fact that it is compact and storage can easily be increased by adding additional boards when required. The central processing unit is linked to the storage unit through a high speed small computer system interface (SCSI) or an advanced technology (AT) attachment and the NAS device is generally accessed over a network connection where the NAS appears on the network as a single node having an internet protocol address.

The demand for high storage capacity has lead to high performance arrays of hard disc drives functioning at a speed of 10 kilo-revolutions per minute and having a storage capacity close to one Terabyte.

Such a throughput capacity requires efficient communication of data in the NAS device between the network and the storage unit. The data flow to and from the network should be as quick as or quicker than the high speed SCSI internal bus so as to use the internal communications bus to its full capacity.

However, network attached storage devices develop communication bottlenecks when large quantities of data are being transferred between an application running on a device connected to the network and the storage unit of the NAS device or when a large number of data communications to network devices exist simultaneously. This results in delayed arrival of the data at its destination and non-deterministic behaviour in terms of bandwidth.

The employment of such large storage capacities in NAS devices increases even further the likelihood of the NAS developing a communications bottleneck between the network and the NAS device as the NAS device contains additional data storage space that can be accessed by the plurality of network device applications.

### SUMMARY OF THE INVENTION

The invention aims to provide a network storage device that provides efficient data processing between the storage unit and the network and guaranteed data communication between the storage unit and the network.

With this goal in mind, the present invention provides a network storage device for communicating data between a network and a storage unit according to claim 1.

Other features of the network storage device are found in the dependent claims.

### BRIEF DESCRIPTION OF THE DRAWINGS

The above object, features and other advantages of the present invention will be best understood from the following detailed description in conjunction with the accompanying drawings, in which
Figure 1 is a schematic block diagram of a network storage device according to the invention;
Figure 2 is a schematic block diagram of the network storage device of Figure 1 showing, in further detail, a network interface component of the network storage device;
Figure 3 is a flow chart showing the operation of a storage data bit-rate regulation mechanism; and
Figure 4 is a schematic block diagram of the network storage device of Figure 1 showing, in further detail, a storage unit management processor of the network storage device.

### DETAILED DESCRIPTION OF PREFERED EMBODIMENTS

In the drawings, the same reference numbers are used to designate the same elements.

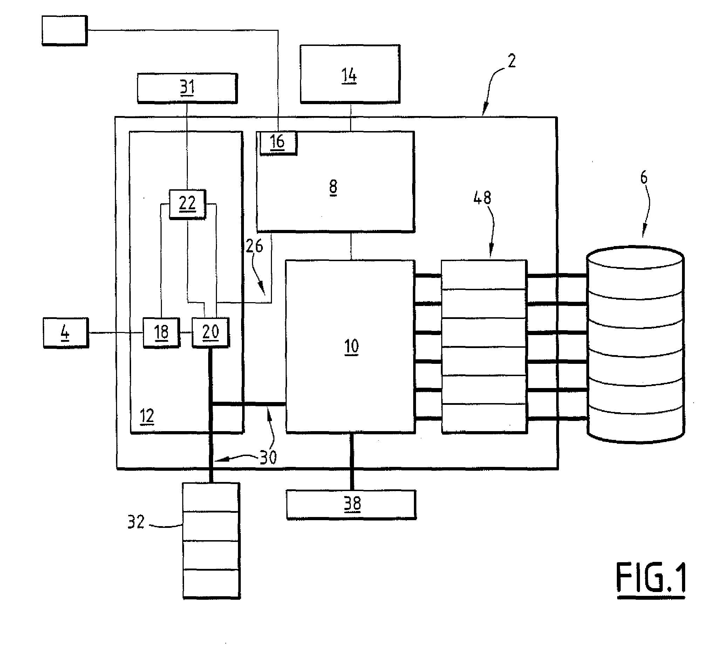

A network storage device 2 for communicating data between a network 4 and a storage unit 6 is illustrated in Figure 1. The data communicated on the network 4 comprises at least one navigational portion and a data payload.

The data payload is communicated on the network 4, between the network storage device 2 and an application running on a device, such as a server for example, connected to the network 4.

The data payload comprises control data or storage data. The control data contains information that organises and synchronises the storage data communication between the network storage device 2 and the network 4, or the control data contains information to control devices connected to the network 4.

The storage data is for example a video data communicated live from a camera or that is stored temporally on a server and that is transferred to the network storage device 2 for storage in the storage unit 6. The storage data can equally be a video recording stored in the storage unit 6 that is transferred to a viewing application on a device connected to the network 4.

The control data contains data quantities much smaller than those associated with the storage data, nevertheless a low latency is required for the control data.

The storage unit 6 is a redundant array of independent disks (RAID). In an alternative embodiment the storage unit 6 is a single hard disk drive.

The network 4 in the current embodiment of the invention is implemented using an Ethernet network infrastructure and uses Ethernet and internet protocols for navigation of data on the network 4.

The communication of data containing storage and control data payloads employs navigational portions of an Ethernet protocol (i.e. an Ethernet frame), an internet protocol (IP) as well as a tranport control protocol (TCP), a user datagram protocol (UDP) or a real time transport protocol (RTP).

The communication of data payloads containing control data additionally employs navigational portions of a real-time control protocol (RTCP), an address resolution protocol (ARP), as well as an internet control message protocol (ICMP) or an internet group management protocol (IGMP).

The network storage device 2 comprises an embedded system processor 8 adapted to communicate and process control data and to manage the storage space of the storage unit 6, a storage unit management processor 10 adapted to organise the communication of storage data and communicate storage data to and from the storage unit 6, and a network interface component 12 that interfaces the network 4 to the network storage device 2 and transfers control data to and from the embedded system processor 8 and storage data to and from the storage unit management processor 10.

The embedded system processor 8 is a standard hardware processor running custom software that operates in association with a double data rate synchronous dynamic random access memory (DDR SDRAM) 14. Functioning as a software processor, it processes only control data and it receives and sends only control data, the control data being used to manage the communication of storage data between the storage unit 6 and the network 4 or to control devices connected to the network 4.

The control data comprising control instructions is received directly from the network interface component 12 or directly from the network 4 via the network interface component 12. The control instructions are interpreted and executed by the embedded system processor 8. The embedded system processor 8 is adapted to send control data via the network interface component 12 to a device on the network 4, or directly to the storage unit management processor 10. The embedded system processor 8 is also adapted, in association with the storage unit management processor 10, to organise the transfer of storage data from the storage unit 6 to the network interface component 12.

The embedded system processor 8 contains software adapted to implement a local digital file management method that manages the physical placement and organisation of the storage data on the storage unit 6.

The storage unit management processor 10 prepares the storage data transfer to the storage unit 6 under the control of the embedded system processor 8 and the local digital file management method manages the physical organisation of the data on the disks. Following the division of the storage data received by the storage unit management processor 10 into disk access blocks, the local digital file management method organises and carries out the physical placement of the disk access blocks into the disk sectors of the RAID disks of 512 byte size.

The local digital file management method keeps a record of the physical location of the storage data in the disc sectors by updating a storage allocation table contained in the embedded system processor 8. The storage allocation table is used to keep track of which sectors belong to which storage data and which sectors remain unused.

The embedded system processor 8 contains a storage cluster interface 16 for communicating with the embedded system processor 8 of at least one other network storage device 2. The embedded system processor 8 contains software adapted to implement a distributed digital file management method that communicates control data to and from the other network storage devices 2 as well as information related to the storage data stored on the other network storage devices 2. This allows a cluster of storage units to be formed.

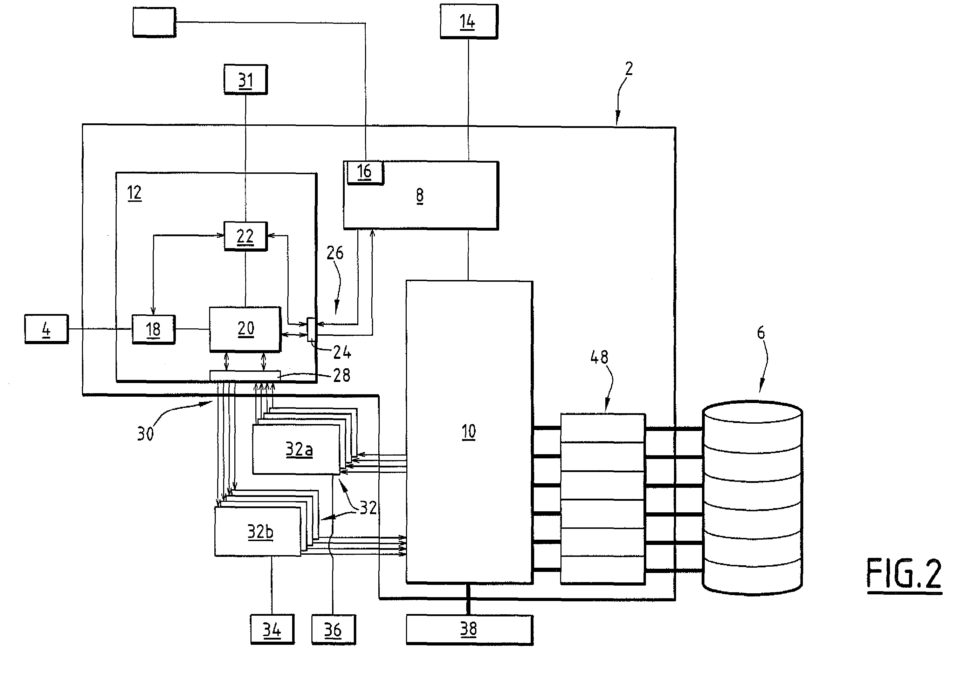

The network interface component 12 is illustrated in detail in Figure 2. The network interface component 12 comprises a network interface 18 to establish communication with the network 4, a hardware processor 20 for implementing dedicated hardware processing and communication of the data arriving from and being sent to the network 4, a local embedded processor 22 for software processing of navigational portions and of the control data, a control data interface 24 for the communication of data payloads comprising control data with an embedded system processor 8 through a control data channel 26 and a storage data interface 28 for communicating data payloads comprising storage data between the hardware processor 20 and the storage unit management processor 10 through a storage data channel 30.

The control data is either used by the local embedded processor 22 or the embedded system processor 8 depending on the destination of the control data contained in the navigational portions. The control data is used locally by the local embedded processor 22 to control the configuration of the network interface component 12 or used by the embedded system processor 8 to control the storage unit management processor 10.

The network interface 18 comprises at least one RJ45 connector linking the network interface component 12 to the network 4. In an alternative embodiment an optical link is used for higher bandwidth data communication between the network storage device 2 and the network 4. The network interface 18 also contains hardware circuits that are adapted to send data bits along the physical communications medium of the network 4 and to receive data bytes from the physical communications medium data of the network 4.

The hardware processor 20 receives incoming data comprising navigational data portions and a data payload from the network 4 through the network interface 18 and also sends data comprising navigational portions and a data payload to be transmitted on the network 4 through the network interface 18.

The hardware processor 20 is a dedicated hardware processor containing highly integrated logic components in an application specific integrated circuit (ASIC) or a field-programmable gate array (FPGA).

The hardware processor 20 is hardware programmed to receive and process navigational portions corresponding to data link, network and transport layers of incoming data from the network 4 and to add navigational portions corresponding to the data link, network and transport layers to the data payloads transferred from the storage unit management processor 10 to the hardware processor 20 for transmission on the network 4.

The hardware processor 20 is programmed to process Ethernet protocol, IP, TCP and UDP navigational portions. Upon reception of data from the network interface 18 the hardware processor 20 is programmed to detect a medium access controller (MAC) address in the navigational portion of the Ethernet protocol. The incoming data is processed further only if the MAC address in the navigational portion corresponds to the MAC address of the network interface component 12.

Processing continues by examining the navigational portion of the internet protocol through the detection and verification of an internet protocol (IP) address. If the data is unicast targeting the network interface component 12, the hardware processor 20 examines the navigational portion of the transport control protocol or the user datagram protocol to detect whether the destination of the data payload is the control data interface 24 or the storage data interface 28 and subsequently transfers the data payload to the corresponding interface. The data payload comprising control data is transferred to the control data interface 24 and the data payload comprising storage data is transferred to the separate storage data interface 28.

If the incoming data is multicast/broadcast the hardware processor 20 examines the navigational portion of the internet protocol and verifies that the internet protocol address corresponds to the internet protocol address of the network storage device 2 or is associated with the network storage device 2 before processing the navigational portion of the transport control protocol or the user datagram protocol as outlined above. Furthermore, when the incoming data is unicast the hardware processor 20 is also adapted to examine the navigational portion of the internet protocol if necessary to filter the incoming data.

Additionally, the hardware processor 20 is programmed to transfer data to the local embedded processor 22 if the incoming data does not contain an internet protocol address or if the destination of the data contained in the navigational portion of the transport control protocol or the user datagram protocol corresponds to that of the local embedded processor 22.

The local embedded processor 22 is a standard hardware processor which is running custom software and has an associated DDR SDRAM memory 31. It receives data with data payloads containing only control data and the control data is processed locally by the software running on the local embedded processor 22.

The local embedded processor 22 uses software processing to process an entire protocol stack comprising protocol layers from the data link layer to the application layer and can process application layer navigational portions of protocols such as internet small computer system interface (iSCSI) to setup the retrieval of storage data stored on the storage unit 6 for transfer over the network 4.

The local embedded processor 22 also generates navigational portions for the hardware processor 20 that are added by the hardware processor 20 to the payload data to be communicated on the network 4.

Data communicated to the network interface component 12 containing navigational portions of a real-time control protocol (RTCP), an address resolution protocol (ARP), an internet control message protocol (ICMP) or an internet group management protocol (IGMP) are all routed by the hardware processor 20 to the local embedded processor 22 to be processed locally or subsequently communicated to the embedded system processor 8.

These protocols are used to organise and synchronise the storage data communication between the storage unit 6 and the network 4 and the local embedded processor 22 is adapted to generate navigational portions for the above protocols during the communication of control data from the embedded system processor 8 to the network 4 or the local embedded processor 22 to the network 4.

The local embedded processor 22 also processes any unexpected data communication arriving at the network interface component 12.

The destination of the incoming data, that is whether it is destined for the local embedded processor 22, the control data interface 24 or the storage data interface 28, is distinguished using the transport layer protocol navigational portion, such as the transport control protocol or the user datagram protocol navigational portion, and an individual IP address assigned to each of the local embedded processor 22, the control data interface 24 and the storage data interface 28.

The local embedded processor 22, the control data interface 24 and the storage data interface 28 are each attributed an individual port number and an IP address following the opening of a communication connection. Using the transport control protocol, a TCP port number is attributed when a TCP connection is established between the network storage device 2 and another device on the network 4 by the local embedded processor 22.

The local embedded processor 22, in association with the embedded system processor 8, is adapted to establish the connection using the "connect", "bind", "listen" and "shutdown" functions of the standard socket system call. The local embedded processor 22 opens a socket and listens passively for a connection coming from the network 4. The device on the network 4 initiates an active open request by sending an initial synchronisation TCP navigational portion to the embedded system processor 8 via the local embedded processor 22 which returns a synchronisation TCP navigational portion in response. An acknowledgement TCP navigational portion is sent to the embedded system processor 8 via the local embedded processor 22 to finally create the connection for data communication and source and destination TCP port numbers are attributed for the connection. The local embedded processor 22 establishes, with the device on the network 4, port numbers and IP addresses for the local embedded processor 22, the control data interface 24 and the storage data interface 28 so that data can be communicated through the network 4 to the local embedded processor 22, the control data interface 24 and the storage data interface 28 using their individual TCP port number and their individual IP address.

During the connection process, information concerning the transport protocol to be used, the IP addresses and MAC address of the devices are exchanged as well as parameters relative to the bandwidth of the data communication. A plurality of connections to one device or several devices on the network 4 can be made in this way.

The port number and IP address are inserted into the navigational portions of the transport control protocol (or the user datagram protocol in the case where the connection is opened for communication with user datagram protocol) and the internet protocol to distinguish the destination of the data to be communicated.

The data connection is closed by the local embedded processor 22 by communicating a TCP navigational portion to the device on the network 4 indicating that the data transfer is finished. The connection is closed once a similar TCP navigational portion is received by the local embedded processor 22 from the device on the network 4.

The hardware processor 20 is programmed to verify that no data payloads are lost in transmission to network storage device 2. The navigational portion of the transport control protocol contains a sequence number that is verified by the hardware processor 20 upon receipt of data permitting the hardware processor 20 to verify that the payload data has arrived in the correct order. Once verified, the hardware processor 20 sends a TCP navigational portion with an acknowledgment of the receipt of the payload data to the transmitting device on the network 4. If the acknowledgement is not received within a predetermined amount of time by the transmitting device, the data is resent to the network interface component 12.

When sending data to the network 4 from the network interface component 12, the hardware processor 20 is programmed to resend the data if an acknowledgement is not sent by the receiving device on the network 4 after the predetermined amount of time has elapsed.

The hardware processor 20 is also programmed to evaluate a checksum for the received data to verify that no data bytes are damaged by comparing the result with the checksum of the received TCP navigational portion and to generate a checksum for the data to be transmited on the network 4 that is inserted into the TCP navigational portion to be transmited.

The control data transferred to the control data interface 24 by the hardware processor 20 is transferred to the embedded system processor 8 through the control data channel 26. The hardware processor 20 is programmed to transfer only control data between the hardware processor 20 and the control data interface 24.

As previously mentioned, the embedded system processor 8 is a standard hardware processor running custom software. Control data is received directly from the local embedded processor 22 and from the network 4 via the hardware processor 20. The embedded system processor 8 is adapted to send control data via the local embedded processor 22 to a device on the network 4 and via the hardware processor 20 to a device on the network 4. The embedded system processor 8 is also adapted to organise the transfer of storage data from the storage unit management processor 10 to the hardware processor 20 via the storage data interface 28.

The opening and closing of connections for data communication to and from a device on the network 4, as described earlier, is achieved through the exchange of control data between the local embedded processor 22 and the device on the network 4 and information such as the source and destination port numbers are exchanged once the connection is established. The embedded system processor 8 contains a connection management table and maintains the table updated as connections are opened and closed with devices on the network 4.

The embedded system processor 8 communicates the characteristics of the connection that are necessary for the data communication such as the MAC addresses, IP addresses and the TCP port numbers to the local embedded processor 22. The local embedded processor 22 then configures the hardware processor 20 to identify a connection when receiving data from a device on the network 4 and provides the relevant MAC addresses, IP addresses and the TCP port numbers to the hardware processor 20 that are added by the hardware processor 20 to the navigational portions when sending data on the network 4.

The opening and closing of connections for data communication using the user datagram protocol or the real time transport protocol and the subsequent transfer of the connection characteristics to the local embedded processor 22 is done in a similar manner.

The communication of other forms of control data, that monitor the quality of service of a multimedia communication through a real time control protocol or that use TCP to keep a record of sequence breaks or timeout occurrences in the arrival storage data, is performed through the communication of control data between the embedded system processor 8 and the device on the network 4 via the local embedded processor 22.

In the case where a device on the network 4 sends control data instructions of the type "open file, get file, close file" to the embedded system processor 8 via the local embedded processor 22 requesting a storage data file, the embedded system processor 8 would send control instructions to the storage unit management processor 10 to open, retrieve the storage data file, close the file and transfer the storage data contained in the file to the storage data interface 28. It then informs the local embedded processor 22 of the destination of the storage data file.

The storage data is transferred to the hardware processor 20 and the hardware processor 20 is informed by the local embedded processor 22 of the connection details. The hardware processor 20 adds the relevant navigational portions to the storage data payload and the storage data is subsequently sent to the network 4.

Storage data entering the network interface component 12 is transferred only to the storage data interface 28 by the hardware processor 20 and is subsequently transported to the storage unit management processor 10 through the storage data channel 30. The hardware processor 20 is programmed to remove all navigational portions and to assemble the data payloads comprising storage data in the correct order, as described above, to form a continuous data stream of storage data at the storage data interface 28 and on the storage data channel 30 to the storage unit management processor 10.

A request to communicate storage data to the network storage device 2 or to receive storage data from the network storage device 2 may originate from a number of applications running on other devices on the network 4 or a request may originate from one application that intends establishing several communications of storage data.

The hardware processor 20 is adapted to establish a plurality of virtual storage communication channels in the storage data interface 28 and each virtual storage communication channel communicates between the storage data interface 28 and the storage unit management processor 10 through the storage data channel 30. Each virtual storage communication channel corresponds to a storage data communication and transports storage data to and from the storage unit management processor 10. The hardware processor 20 is also adapted to terminate the virtual storage communication channel once the storage data transfer is completed.

One or several virtual storage communication channels are opened by opening a data communication connection using the standard socket call system through the exchange of control data between the network storage device 2 and a device on the network 4 via the local embedded processor 22 as described earlier. The existence of a virtual storage communication channel corresponds to an access to one data file or a multiple number of data files.

Once the connection is open, the virtual storage communication channel is assigned a TCP port number and each virtual storage communication channel is assigned an individual and distinguishing IP address. In the current embodiment, each virtual storage communication channel, that is each incoming data communication to the network interface component 12 and each outgoing communication from the network interface component 12, is assigned an individual destination IP address. Thus, in the current embodiment the virtual storage communication channels have the same port number (the port number of the storage data interface 28) but different destination IP addresses. A record of the IP addresses and port number for each virtual storage communication channel connection opening is maintained in the connection management table of the embedded system processor 8.

The hardware processor 20 then establishes and sets up the virtual storage communication channel in the storage data interface 28 by associating the virtual storage communication channel with a dedicated memory buffer segment that is connected to the storage data interface 28 via a memory bus. The dedicated memory buffer segment is also connected to the storage unit management processor 10 and each dedicated memory buffer segment has a physically separated communication medium, such as an electrical wire of a cable, connected to the storage unit management processor 10.

The memory buffer segment is a segment of a single DRAM memory 32 that has been partitioned with data flow being managed by the principle of first in first out (FIFO) and the memory segment is continually maintained full for data flow in the direction from the storage unit 6 to the network 4. For the data flow direction from the network 4 to the storage unit 6 the memory segment is continually maintained empty.

In another embodiment, a single connection is used between the DRAM memory 32 and the storage unit management processor 10 and the storage data of the virtual storage communication channels is communicated serially using internal navigational portions that are added by the hardware processor 20.

A total of eight segments of a DRAM memory 32a, 32b are illustrated in Figure 2, thus allowing a total of eight virtual storage communication channels to be created in the current embodiment. In figure 2, the single DRAM memory 32 is illustrated in two parts 32a, 32b for illustrative purposes.

The memory buffer is organised so as to adapt the data throughput of the network interface component 12 to the storage unit management processor 10 throughput requirements. The size of a memory buffer segment depends on whether the connection of the memory buffer segment to the storage unit management processor 10 is configured as a separate medium or as a single serial connection. The use of a single serial connection necessitates that the data of all the virtual storage communication channels be temporarily stored before subsequent multiplexing.

The size of a memory buffer segment also depends on the nature of the communications interface used for communication between the memory buffer segment and the storage unit management processor 10, that is whether it is proprietary or a peripheral component interconnect express (PCI express) for example. The nature of the communications interface used determines the size of the data transfers and the size of the memory buffer segment is optimised to reduce the overhead size/data transfer size ratio.

A virtual storage communication channel is thus setup from the storage data interface 28 to the storage unit management processor 10 through the memory bus to a dedicated memory segment and to the storage unit management processor 10 through an individual segment connection to the storage unit management processor 10. The storage data channel 30 in the current embodiment comprises eight virtual storage communication channels.

The IP destination address of the virtual storage communication channel is communicated to the hardware processor 20 via the local embedded processor 22. The hardware processor 20 is programmed by the local embedded processor 22 to attribute a segment identification number to a memory buffer segment 32a, 32b and to associate the segment identification number with a IP destination address of a virtual storage communication channel in order to establish the virtual storage communication channel.

The local embedded processor 22 informs the embedded system processor 8 of the memory buffer segment 32b through which the incoming storage data destined for a certain IP destination address will be communicated to it. The local embedded processor 22 also informs the embedded system processor 8 of the memory buffer segment 32a to which the storage unit management processor 10 should communicate storage data that is to be sent to a certain IP destination address on the network 4 by the hardware processor 20.

While the partitioned single DRAM memory 32a, 32b contains a plurality of memory buffer segments, only those segments that have been associated with an IP destination address are active, leaving the remaining segments free to establish other virtual storage communication channels.

The hardware processor 20 distinguishes incoming data on different virtual storage communication channels by detecting the destination IP address of each virtual storage communication channel and streaming the incoming storage data to the storage data interface 28 and the corresponding memory buffer segment 32b having a segment identification number associated with the IP destination address of the virtual storage communication channel. The hardware processor 20 removes all navigational portions and executes a checksum on the data as mentioned previously.

The hardware processor 20 distinguishes data sent to it by the storage unit management processor 10 using the segment identification number of the memory buffer segment 32a to which the storage data is sent by the storage unit management processor 10. The hardware processor 20 transfers the data from the storage data interface 28 and inserts the connection characteristics supplied by the local embedded processor 22 into the navigational portions that are combined with the data payload for communication on the network 4. The hardware processor 20 also performs and inserts the checksum for the data to be sent.

The hardware processor 20 is programmed to communicate storage data to and from the storage unit management processor 10 using the "send" and "recv" functions of the standard socket system call. A total of eight virtual storage communication channels are illustrated in Figure 2, four transporting storage data received by the network interface component 12 and four transmitting storage data to be transmitted from the network interface component 12.

Once the storage data communication has finished between a device on the network 4 and the storage unit management processor 10, the hardware processor 20 is informed of the closure by the embedded system processor 8 via the local embedded processor 22. The local embedded processor 22 now programs the hardware processor 20 to remove the association between the virtual storage communication channel IP address and the segment identification number of the memory buffer segment 32a, 32b in order to terminate the virtual storage communication channel.

The network interface component 12 has an assigned upper bandwidth limit for communication between the network storage device 2 and the network 4 and this upper bandwidth limit is determined by a network manager of the network 4. The accumulated bandwidth of all the established virtual storage communication channels in the storage data interface 28, including the virtual storage communication channels for storage data arriving to the network interface component 12 and transmitted from the network interface component 12, and the bandwidth used for control data communication is always inferior to the upper bandwidth limit. In the current embodiment the control data is assigned 20% of the upper bandwidth limit with 80% reserved for storage data.

During the opening of a virtual storage communication channel, the network storage device 2 and a device on the network 4 exchange control data via the local embedded processor 22 concerning the bandwidth and lifetime of the virtual storage communication channel being negotiated for data communication and the bandwidth and lifetime are determined according to the data transfer size requested by the network storage device 2 or the device on the network 4.

The data transfer size is divided into a plurality of data packets and the size of a data packet is also an adjustable parameter. The smaller the data bit rate of the virtual storage communication channel, the longer the virtual storage communication channel lifetime required to complete the storage data transfer.

The network 4 and the local embedded processor 22 agree and fix the bandwidth and lifetime parameters. The hardware processor 20 is adapted to be programmed by the local embedded processor 22 to ignore any interruption requests received during the lifetime of the virtual storage communication channel. However, as the hardware processor 20 is controlled by the local embedded processor 22, it can receive a cancellation order from the local embedded processor 22, the cancellation order originating from a device on the network 4 or a user. Once the virtual storage communication channel is opened and established in the storage data interface 28, the storage data transfer commences. The virtual storage communication channel and the virtual storage communication channel bandwidth remain completely outside the control of the local embedded processor 22 during the virtual storage communication channel lifetime.

At the end of the virtual storage communication channel lifetime, the connection of the virtual storage communication channel is closed and the hardware processor 20 is programmed by the local embedded processor 22 to terminate the virtual storage communication channel setup in the storage data interface 28. The virtual storage communication channel bandwidth only becomes available for use by a new virtual storage communication channel when the virtual storage communication channel is terminated in the storage data interface 28. Following termination, the embedded system processor 8 is updated by the local embedded processor 22 and updates the connection management table of the connection closure.

During the virtual storage communication channel lifetime, the agreed parameters of the virtual storage communication channel cannot be changed by a device on the network 4, the network manager or the network storage device 2 and they cannot interfere with the data transfer.

The local embedded processor 22 is programmed to open a virtual storage communication channel, in association with the hardware processor 20, only if an accumulated bandwidth, corresponding to the sum of all existing virtual storage communication channel bandwidths and including the virtual storage communication channel bandwidth to be assigned to the current virtual storage communication channel connection request for communication if established, is inferior to the 80% of the upper bandwidth limit reserved for storage data communication by the network interface component 12. The local embedded processor 22 is adapted to calculate the accumulated bandwidth at any given moment.

During storage data communication from the network 4 to the storage unit management processor 10, direct memory addressing (DMA) is employed to transfer the storage data communicated from the hardware processor 20 to a DMA channel set up in the dedicated memory buffer segment of the memory buffer 32b. An external receiving DMA controller 34 implemented in programmable hardware in association with the local embedded processor 22 controls the transfer of the storage data to the storage unit management processor 10 along the virtual storage communication channel of the storage data channel 30.

The network interface component 12 when operating as a receiver of storage data from the network 4 functions as an interface that creates a stream of storage data flowing through the virtual storage communication channel to the storage unit management processor 10.

During storage data communication from the storage unit management processor 10 to the network 4, direct memory addressing (DMA) is also employed to transfer the storage data communicated from the storage unit management processor 10 to a DMA channel set up in the dedicated memory buffer segment of the memory buffer 32b. An external transmission DMA controller 36 implemented in programmable hardware in association with the local embedded processor 22 controls the transfer of the storage data along the virtual storage communication channel to the storage data interface 28 and the hardware processor 20.

The hardware processor 20 is programmed to process and transfer the storage data from the storage data interface 28 and control data from the control data interface 24 to the network 4. The local embedded processor 22, through the exchange of control data with the embedded system processor 8 and using the segment identification numbers of the memory buffer segments, is adapted to distinguish each virtual storage communication channel and is aware of the destination of the data on each virtual storage communication channel. The local embedded processor 22 prepares and programs the insertion of data navigational portions by the hardware processor 20 at the transport, network and data link layer. Data navigational portions for the application layer are generated and inserted by the local embedded processor 22.

To the data payload comprising storage data coming from the storage data interface 28 or control data coming from the control data interface 24, a navigational portion for the user datagram protocol or transfer control protocol navigational portion is added, a navigational portion is added for the internet protocol and for the Ethernet protocol. The resulting data ensemble is transferred by the hardware processor 20 to the network interface 18 to be sent on the network 4.

The control data and the storage data arrive at the network interface component 12 for transmission to the network 4 through the control data channel 26 and the storage data channel 30, as illustrated in Figure 2. The assigned upper bandwidth limit for communication between the interface device 3 and the network 4 determined by the network manager is shared by the control data being received and being transmitted and by the virtual storage communication channels transmitting storage data and receiving storage data.

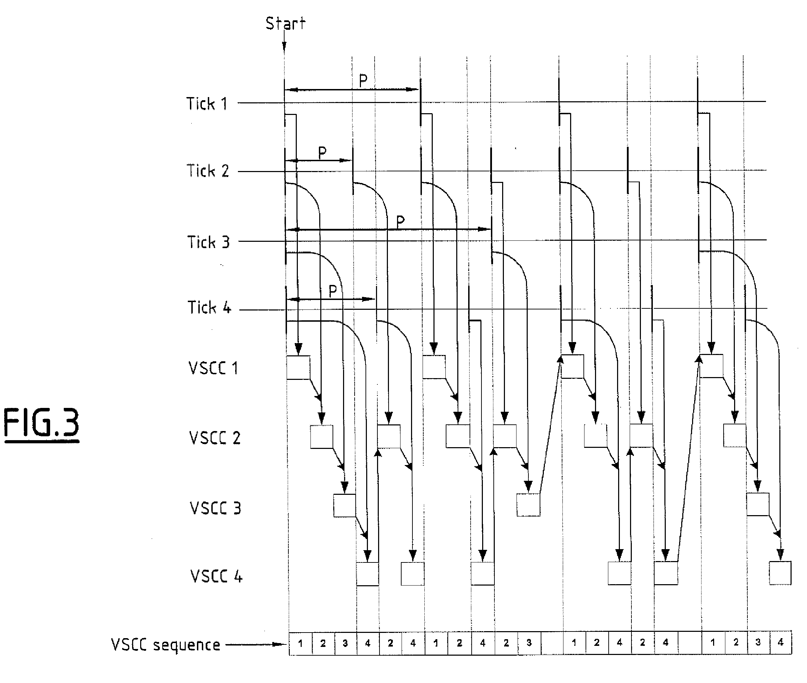

As previously mentioned, in the current embodiment the control data is assigned 20% of the assigned upper bandwidth limit with 80% reserved for storage data. A storage data bit-rate regulation mechanism, illustrated in Figure 3, is used to regulate the transmission of storage data to the network to ensure that the agreed virtual storage communication channel bandwidth is respected and that the reserved 80% of the assigned upper bandwidth limit is not surpassed by the established virtual storage communication channels. The storage data bit-rate regulation mechanism is managed by the local embedded processor 22 in association with the external transmission DMA controller 36.

The storage data bit-rate regulation mechanism (Figure 3) consists in delivering a regular tick to trigger the external transmission DMA controller 36 to transfer the data to the storage data interface 28 and the hardware processor 20. The data packets from each virtual storage communication channel are temporarily stored in the memory buffer 32a of FIFO type and the transfer from the memory buffer 32a to the hardware processor 20 is controlled by the bit-rate regulation mechanism. A transfer occurs to the hardware processor 20 upon each occurrence of a tick for the concerned virtual storage communication channel.

A tick period P is set up for each of the four transmission virtual storage communication channels (VSCC) illustrated in Figure 3. The tick period P is determined by dividing the size of the data packet agreed for the virtual storage communication channel by the virtual storage communication channel bit-rate and one data packet is sent per tick period P.

Transmission of a data payload is carried out when a tick of the virtual storage communication channel has occurred and as soon as the transmission of the previous payload is ended. If several ticks belonging to different virtual storage communication channels occur simultaneously, as is the case at the start of the transmission as illustrated in Figure 3, a round robin rule is applied.

The resulting virtual storage communication channel transmission (VSCC) sequence is illustrated in Figure 3. The result is a multiplexed stream where the instantaneous bit-rate is never higher than the upper bandwidth limit of the virtual storage communication channels.

A control data bit-rate regulation mechanism is also used to regulate the transmission of control data to the hardware processor 20 (that is subsequently sent to the network 4) to ensure the assigned 20% of the upper bandwidth limit is not surpassed. The control data bit-rate regulation mechanism is managed by the embedded system processor 8 in association with a timer.

The control data bit-rate regulation mechanism avoids undesirable transfers having high unlimited bit-rates and short duration that would saturate all the bandwidth. At each transfer of control data to the hardware processor 20 the timer is triggered to start a transfer time and the next transfer to the hardware processor 20 cannot occur until the transfer time is terminated allowing the data transfer rate to be controlled. The transfer time depends on the transfer size, the larger the transfer size the longer the transfer time. The transfer bit rate is the transfer size divided by the transfer time. The timer guarantees that the bandwidth allocated to the control data is not surpassed.

The control data and storage data bit-rate regulation mechanisms ensure that the agreed virtual storage communication channel bandwidth is not surpassed during the subsequent transmission of data by the network interface component 12. The transmitting device on the network 4 employs similar mechanisms to respect the assigned virtual storage communication channel bandwidths.

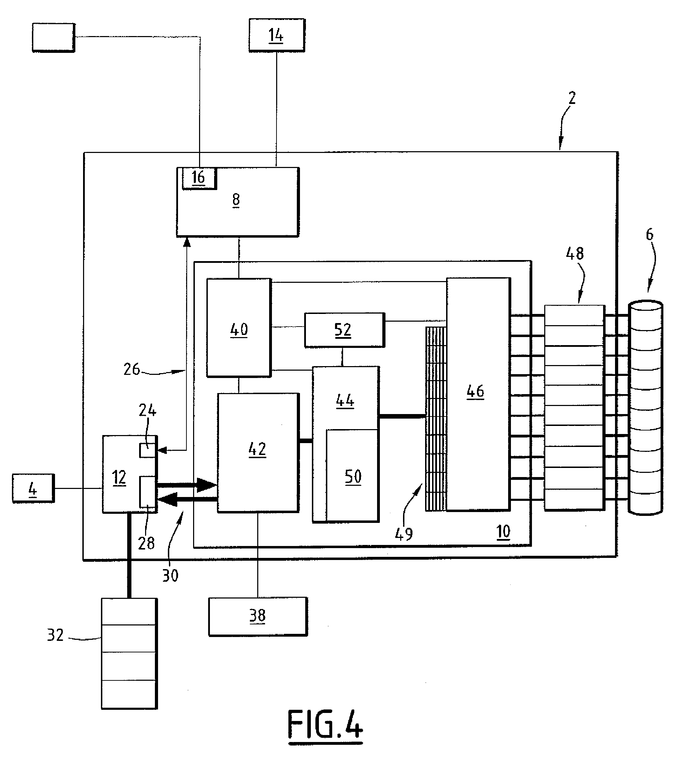

The storage unit management processor 10, as illustrated in detail in Figure 4, operates in association with a double data rate synchronous dynamic random access memory 38 and comprises a control unit 40 for communication of control data with the embedded system processor 8, a stream processor 42 communicating storage data to and from a striping processor 44, the striping processor 44 dividing the storage data into data storage blocks to be transferred to a storage unit SCSI controller 46, the SCSI controller 46 transferring data directly to and from the storage unit 6 via a serial attached SCSI interface 48. The embedded system processor 8 controls all the constituent components of the storage unit management processor 10 including the control unit 40, the stream processor 42, the striping processor 44 and the SCSI controller 46.

The storage unit management processor 10 is implemented as a dedicated hardware processor and the serial attached SCSI interface 48 is also realised in dedicated hardware. The SCSI controller 46 contains a plurality of parallel SCSI controller channels (not illustrated) and the serial attached SCSI interface 48 contains a plurality of parallel serial attached SCSI interface channels.

Each RAID disk of the storage unit 6 has a corresponding individual SCSI controller channel in the SCSI controller 46 and a corresponding individual serial attached SCSI interface channel in the serial attached SCSI interface 48. Each RAID disk of the storage unit 6 communicates with its corresponding individual SCSI controller channel via an individual serial attached SCSI interface channel and access to the disks is parallel and simultaneous.

The storage unit management processor 10 is adapted to carry out the functions of a RAID controller. The storage unit management processor 10 is hardware programmed to implement a RAID level 5 organisation of the data on the RAID disks in association with the embedded system processor 8.

The control unit 40 is adapted to execute the commands of the embedded system processor 8 and to communicate control instructions with the stream processor 42, the stripping processor 44 and the SCSI controller 46.

The stream processor 42 transfers storage data payloads to the storage data interface 28 and the hardware processor 20, via the DRAM memory 32 containing dedicated memory buffer segments, to be transported on the network 4. The stream processor 42 also transports the storage data from the storage data interface 28, via the DRAM memory 32, to the stripping processor 44. The two operations of the stream processor 42 are bi-directional and simultaneous.

The storage data is streamed from each virtual storage communication channel and each memory buffer segment 32b by the stream processor 42 to the stripping processor 44. The writing of the storage data to the storage unit 6 is then achieved in association with the embedded system processor 8 that exchanges control instructions with the stripping processor 44 and the SCSI controller 46 via the control unit 40.

The transfer of storage data to the network 4 during a read operation is achieved in a similar manner under the control of the embedded system processor 8. As the embedded system processor 8 contains information concerning the segment identification numbers of the memory buffer segments 32a associated with the connection port numbers and IP addresses of the virtual storage communication channels, it uses this information to identify the memory buffer segment 32a to which the storage data should be transferred.

The embedded system processor 8 subsequently controls the transfer of the storage data through the stream processor 42 from the striping processor 44 and to the memory buffer segment 32a having the segment identification number that is associated with the virtual storage communication channel destination IP address to which the storage data is to be communicated.

During storage data transfer to the storage unit 6, the stripping processor 44 is adapted to divide the stream of storage data into data storage blocks of 16 bits corresponding to the disk access size of the RAID disks in the storage unit 6.

The storage unit management processor 10 additionally comprises a stripe buffer 49. The stripe buffer 49 contains a plurality of parallel channel buffers or stripes and each individual SCSI controller channel has an associated channel buffer. Each buffer temporarily stores a plurality of data storage blocks and performs a grouped transfer of data between the striping processor 44 and the array of disks of the storage unit 6 via the SCSI controller 46 and the serial attached SCSI interface 48 in order to optimise storage data communication.

The SCSI controller 46 communicates with a RAID disk through a serial attached SCSI interface to write the data blocks of 16 bits to the RAID disk and to read data from the RAID disk. The fast response of the SCSI controller 46 when transferring data to and from the disk optimises the storage data transfer speed between the storage unit 6 and the network 4. Furthermore, it permits fast communication of control data between the RAID disk and the embedded host system processor 8 during storage data writing or reading operations.

The storage unit management processor 10 also comprises a parity generator 50 and a rebuild component 52.

The parity generator 50 operates in association with the stripping processor 44 and is based on an XOR array that "Xors" bit by bit the storage data. The rebuild component 52 is adapted to reconstruct the data contained in a damaged part of a RAID disk in association with the control unit 40. Only the sectors of the disk that were used are reconstructed. The rebuild component 52 is implemented in hardware and the reading operation, the XOR operation and the sector writing operation are autonomous and without exchange with the system. The rebuild operation is thus in competition with the other accesses to the RAID disks during reading and writing. The rebuild operation does not "cost" more than one access in terms of bandwidth and can be managed by the distributed file management system.

The SCSI controller 46 is implemented in hardware and communication is massively parallel from the stripe buffer 49 to the serial attached SCSI disk interfaces. There is one buffer per stripe, one SCSI controller per stripe, one serial attached SCSI disc interface per disk and thus one cable per disk. In the current embodiment serial attached SCSI disks (or in an alternative embodiment serial ATA) are used for the many advantages that it brings such as its speed, reliability and compactness. This parallel architecture reduces the access time as the typical seek time is quasi-deterministic as a mean value can be determined and used to anticipate a command. However, the dispersion is still an unknown parameter.

The stripe buffer 49 contains as many channels as there are disks. The stripe buffer 49 is dimensioned not only to optimise the communication, but it is also dimensioned to optimise the access time to the disk. The access time comprises the control time, the time for displacing the heads and the time for transferring the data on the medium. The smaller the size of the transfer the more the sustained transfer rate (sustained bit-rate) is small. To increase the transfer size it is necessary to accumulate the data in the stripe buffer to limit the number of accesses to the disks. The chosen size of the stripe buffer is determined by accessing at what point increasing its size becomes economically unfavourable (a large amount of memory) and the point at which the time "lost" during its use starts to become significant when compared to the transfer time. Similarly, the passage through the buffers introduces latency in the data flow which can be an inconvenience in certain cases (a secondary inconvenience for a server). A good compromise is found in having a stripe buffer of size between 128 kilo-bits and 1 Mega-bit per channel.

As the virtual storage communication channels are protected from external manipulation or interference by the network 4, the network manager and the network storage device 2, and an additional virtual storage communication channels cannot be established if its creation causes the upper bandwidth limit of the network storage device 2 to be exceeded, the bandwidth of the virtual storage communication channels is guaranteed during storage data communication. Consequently, storage data communication is assured between the storage unit 6 and the network 4 and a communication bottleneck is avoided.

The complete separation of the control data and storage data in the network storage device 2 and the use of a hardware processor 20, a hardware implemented storage unit management processor 10 and serial attached SCSI interface 48 assures a highly parallel and efficient streaming of storage data between the network 4 and the storage unit 6.

A reliable and available network storage device can be achieved by replicating all the constituent components of the network storage device (2) so as to provide redundancy and a network storage device available at all times.

The network storage device 2 implements a decentralisation architecture on the basis of dedicated hardware processors. Data transfer operations and rebuild operations are initialised and controlled by a "manager" (embedded system processor) but data transfer and processing is carried out by dedicated hardware processors. The network storage device 2 due to its decentralised architecture is capable of fulfilling the predicted data transfer requirements of 10 Giga-bit per sec per server in line with expected advances in HDD storage technology. In comparison, current network storage devices comprising software multi-processors handle with difficulty data transfers of 1 Giga-bit per sec.

The mixed hardware/software architecture according to the present invention not only allows high speed data flow but also permits device power consumption to remain relatively low and does not require aggressive cooling elements. This results in a compact network storage device having a high storage capacity and density, a high processing efficiency, a high data throughput combined with high reliability through RAID and the rebuild function as well as having availability through redundancy.

## Claims

1. Network storage device (2) for communicating data between a network (4) and a storage unit (6), the data comprising at least one navigational portion for navigating the data through the network (4) and a data payload containing control data or storage data; the network storage device (2) comprising
an embedded system processor (8) adapted to manage the storage space of the storage unit (6) and to communicate and process control data;
a network interface component (12) interfacing the network (4) to the network storage device (2), the network interface component (12) comprising a local embedded processor (22) for transferring control data to and from the embedded host processor (8);
a storage unit management processor (10) adapted to organise storage data communication and to communicate storage data between the network interface component (12) and the storage unit (6);
the network storage device (2) being **characterised in that** the network interface component (12) comprises a hardware processor (20) implemented in dedicated hardware for dedicated hardware processing of data communicated between the network (4) and the storage unit (6), the data comprising a data payload and at least one navigational portion; and
the network interface component (12) additionally comprises a control data interface (24) and a storage data interface (28); the network interface component (12) being adapted to communicate a data payload containing only control data with the embedded system processor (8) through the control data interface (24), and to communicate a data payload containing only storage data with the storage unit management processor (10) through the storage data interface (28); the storage data interface (28) and the control data interface (24) being completely separated from one another.

2. Network storage device (2) according to claim 1, **characterised in that** the hardware processor (20) is adapted to process the navigational portions of the data transmitted to and from the network storage device (2) and to transfer the associated data payloads comprising control data to the control data interface (24) and the associated data payloads comprising storage data to the storage data interface (28) in accordance with the contents of the navigational portions.

3. Network storage device (2) according to claims 1 or 2, **characterised in that** the hardware processor (20) is adapted to establish a plurality of virtual storage communication channels in the storage data interface (28), each virtual storage communication channel corresponding to an independent data transfer of storage data to or from the storage unit (6) and each virtual storage communication channel having a determined and guaranteed bandwidth for storage data communication.

4. Network storage device (2) according to claim 3, **characterised in that** the hardware processor (20) is adapted to process the navigational portions of the data transmitted to the network storage device (2) and to transfer the associated data payloads comprising storage data to the corresponding virtual storage communication channel in accordance with the contents of the navigational portions.

5. Network storage device (2) according to claims 3 or 4, **characterised in that** the storage data interface (28) has an associated and dedicated memory buffer (32) and the hardware processor (20) is adapted to be programmed to correlate a segment of the dedicated memory buffer (32) with data contained in at least one navigational portion of the communication data to establish a virtual storage communication channel.

6. Network storage device (2) according to any one of claims 3 to 5, **characterised in that** the hardware processor (20) is adapted to establish a virtual storage communication channel, in association with the local embedded processor (22), for a time duration corresponding to a virtual storage communication channel lifetime, and the hardware processor (20) is adapted to reject all interruption requests of the network storage device (2) during the virtual storage communication channel lifetime.

7. Network storage device (2) according to any one of claims 3 to 6, **characterised in that** the local embedded processor (22), in association with the hardware processor (20), is adapted to calculate an accumulated bandwidth corresponding to the sum of all existing virtual storage communication channel bandwidths and including the virtual storage communication channel bandwidth to be assigned to the current virtual storage communication channel if established; and the local embedded processor (22) is adapted to establish a virtual storage communication channel only if the accumulated bandwidth is inferior to an assigned upper bandwidth limit of the network storage device (2).

8. Network storage device (2) according to any one of the preceding claims, **characterised in that** the network storage device (2) comprises a serial attached SCSI interface (48) implemented in dedicated hardware and adapted to communicate storage data between the storage unit (6) and the storage unit management processor (10), and
the storage unit management processor (10) comprises a stream processor (42), a striping processor (44) and a SCSI controller (46) all implemented in dedicated hardware; the stream processor (42) being adapted to communicate storage data between the hardware processor (20) and the striping processor (44), the striping processor (44) being adapted to divide the storage data into data storage blocks and to communicate the data storage blocks with the storage unit SCSI controller (46), the SCSI controller (46) being adapted to transfer data storage blocks directly to and from the storage unit (6) via the serial attached SCSI interface (48).

9. Network storage device (2) according to claim 8, **characterised in that** the storage unit (6) comprises a plurality of hard disk drives, the SCSI controller (46) contains a plurality of parallel SCSI controller channels and the serial attached SCSI interface (48) contains a plurality of parallel serial attached SCSI interface channels, each hard disk drive of the storage unit (6) having an associated individual SCSI controller channel in the SCSI controller 46 and an associated individual serial attached SCSI interface channel in the serial attached SCSI interface 48, and each SCSI controller channel being adapted to transfer storage data directly to and from its associated hard disk drive via its associated the serial attached SCSI interface channel to provide parallel and simultaneous hard disk drive access.

10. Network storage device (2) according to any one of the preceding claims, **characterised in that** the hardware processor (20) is adapted to process and transfer data arriving from the network (4); the data being processed and transferred through the detection of a medium access controller address contained in an Ethernet protocol navigational portion, the detection of an internet protocol address contained in a internet protocol navigational portion and through the detection of a destination port number for the payload data in a transport control protocol navigational portion, the destination port number corresponding to the control data interface (24) and the storage data interface (28).
